# EUROPÄISCHE PATENTSCHRIFT

(11) **EP 3 647 124 B1**
(45) Veröffentlichungstag und Bekanntmachung des Hinweises auf die Patenterteilung: **01.06.2022**
(21) Anmeldenummer: 19214122.4
(22) Anmeldetag: 06.12.2019
(51) Int. Cl.: B60R 13/02

(54) **KRAFTFAHRZEUG SOWIE SEITENWANDVERKLEIDUNGSELEMENT FÜR KRAFTFAHRZEUGINNENWÄNDE**
MOTOR VEHICLE AND SIDE WALL CLADDING ELEMENT FOR MOTOR VEHICLE INTERIOR WALLS
VÉHICULE AUTOMOBILE AINSI QU'ÉLÉMENT DE REVÊTEMENT DE PAROI LATÉRALE POUR PAROIS INTÉRIEURES DE VÉHICULE AUTOMOBILE

(43) Veröffentlichungstag der Anmeldung: 06.05.2020
(73) Patentinhaber: Blomberger Holzindustrie GmbH, 32825 Blomberg (DE)
(72) Erfinder: KRAMPE, Bernd-Peter, 45731 Waltrop (DE)
(74) Vertreter: Kalkoff & Partner Patentanwälte mbB

(56) Entgegenhaltungen:
- DE-A1-102017 006 089
- DE-U1- 8 627 863

## Beschreibung

Die Erfindung betrifft ein Seitenwandverkleidungselement für Kraftfahrzeuginnenwände, mit
- einem Grundkörper zur Bildung eines Abschnitts einer Kraftfahrzeuginnenwandverkleidung und
- einem von dem Grundkörper vorstehenden Kopplungskörper zur Beabstandung des Grundkörpers von der Kraftfahrzeuginnenwand.

Ferner betrifft die Erfindung ein Kraftfahrzeug mit einer an einer Kraftfahrzeuginnenwand angeordneten Kraftfahrzeuginnenwandverkleidung.

Seitenwandverkleidungselemente, mittels derer der Innenraum von Kraftfahrzeugen, insbesondere von gewerblich genutzten leichten Nutzfahrzeugen ausgekleidet werden kann, sind in vielfältigen Ausgestaltungen aus dem Stand der Technik bekannt. Sie umfassen einen zumindest einen Abschnitt der Kraftfahrzeuginnenwandverkleidung bildenden Grundkörper. Der Kopplungskörper dient dabei zum einen zur Befestigung des Grundkörpers an einer durch die Fahrzeugkarosserie gebildeten Kraftfahrzeuginnenwand und bestimmt zum anderen über seine Erstreckung gegenüber der Rückseite des Grundkörpers den Abstand, beziehungsweise die Position des Grundkörpers gegenüber der Kraftfahrzeuginnenwand. Bei der Kraftfahrzeuginnenwand handelt es sich dabei um die dem Innenraum zugewandten Abschnitte der Fahrzeugkarosserie, bspw. der den Außenseiten gegenüberliegenden Innenseiten der die Fahrzeugkarosserie bildenden Karosseriebleche.

Kraftfahrzeuginnenwandverkleidungen der eingangs genannten Art dienen insbesondere bei leichten Nutzfahrzeugen dazu, die üblicherweise mit im Abstand voneinander angeordneten Stützstreben versehene Kraftfahrzeuginnenwand so zu verkleiden, dass eine durchgehende Fahrzeuginnenwand entsteht, welche erst eine komfortable Nutzung des Fahrzeuginnenraums ermöglicht, wobei die Seitenwandverkleidungselemente auch mit spezifischen, dem Einsatzzweck des Nutzfahrzeugs entsprechenden Vorrichtungen, beispielsweise Befestigungsösen, Bohrungen, Stanzungen oder dergleichen, versehen sein können. Dabei kann beispielsweise ein Laderaum des Nutzfahrzeugs vollständig oder auch nur innerhalb bestimmter Bereiche mit dem Seitenwandverkleidungselement versehen werden.

Zur Bildung der Kraftfahrzeuginnenwandverkleidung ist es notwendig, eines oder mehrere Seitenwandverkleidungselemente ortsfest gegenüber der Kraftfahrzeuginnenwand an dem Kraftfahrzeug festzulegen. Hierfür ist es derzeit erforderlich, irreversibel in die Fahrzeugkarosserie einzugreifen, wobei beispielsweise Befestigungsschrauben verwendet werden, die sich durch hierfür eingebrachte, durch diese erzeugte Bohrungen oder Löcher in den Stützstreben erstrecken. Dieser Eingriff schädigt die Karosserie, die in diesen Bereichen aufgrund der Zerstörung eines vorher vorhandenen Korrosionsschutzes einer erhöhten Rostneigung unterliegt. Zu einer Schädigung der Karosserie kann es auch aufgrund sich innerhalb der Hohlräume ansammelnder Bohrspähne kommen, die infolge der Herstellung der Befestigungsöffnungen für Clipse, Schrauben oder dergleichen anfallen. DE8627863U offenbart ein Seitenwandverkleidungselement mit den Merkmalen des Oberbegriffs des Anspruchs 1.

Hiervon ausgehend liegt der Erfindung die Aufgabe zugrunde, ein Kraftfahrzeug mit einer durch mindestens ein Seitenwandverkleidungselement gebildeten Kraftfahrzeuginnenwandverkleidung sowie ein Seitenwandverkleidungselement für eine Kraftfahrzeuginnenwandverkleidung bereitzustellen, welches einfach und kostengünstig in der Herstellung ist und sich zerstörungsfrei an dem Kraftfahrzeug befestigen lässt.

Die Erfindung löst die Aufgabe durch ein Seitenwandverkleidungselement mit den Merkmalen des Anspruchs 1 und ein Kraftfahrzeug mit den Merkmalen des Anspruchs 12. Vorteilhafte Weiterbildungen der Erfindung sind in den jeweils abhängigen Ansprüchen angegeben.

Kennzeichnend für das erfindungsgemäße Seitenwandverkleidungselement ist, dass der Kopplungskörper ein zur stoffschlüssigen Befestigung an der Kraftfahrzeuginnenwand ausgebildetes Verbindungselement, ein über einen ersten Anschlussabschnitt mit dem Grundkörper und über einen zweiten Anschlussabschnitt mit dem Verbindungselement verbundenes erstes Distanzelement und ein über einen dritten Anschlussabschnitt mit dem Verbindungselement und über einen vierten Anschlussabschnitt mit dem Grundkörper verbundenes zweites Distanzelement aufweist.

Bei dem Grundkörper des erfindungsgemäßen Seitenwandverkleidungselements handelt es sich um ein flächiges Element, dessen Vorderseite in der montierten Lage des Seitenwandverkleidungselements an der Kraftfahrzeuginnenwand einen dem Innenraum zugewandten Abschnitt der Kraftfahrzeuginnenwandverkleidung bildet. Die Form des Grundkörpers ist dabei entsprechend der gewünschten Ausgestaltung der Kraftfahrzeuginnenwandverkleidung gewählt und kann beispielsweise als ebene Platte ausgebildet sein oder auch einen profilierten und/oder strukturierten, beispielsweise gebogenen Verlauf aufweisen.

Zur Montage des Seitenwandverkleidungselements an der Kraftfahrzeuginnenwand sowie zur Positionierung des Grundkörpers gegenüber der Kraftfahrzeuginnenwand dient der von einer Rückseite des Grundkörpers vorstehende Kopplungskörper mit dem Verbindungselement. Das Verbindungselement ist zur stoffschlüssigen Befestigung an der Kraftfahrzeuginnenwand ausgebildet und ermöglicht es so, das Seitenwandverkleidungselement ohne eine irreversible Manipulation der Fahrzeugkarosserie an der Kraftfahrzeuginnenwand, zu der gemäß der Erfindung auch Abschnitte von an der Kraftfahrzeuginnenwand verlaufenden Stützstreben zählen, festzulegen. Das Verbindungselement ist bevorzugt eben und flächig ausgebildet, um eine gute formschlüssige Anbindung an der Kraftfahrzeuginnenwand zu ermöglichen, kann jedoch auch einen an die Kraftfahrzeuginnenwand angepassten, gebogenen Verlauf aufweisen.

Der Abstand des einen Abschnitt der Kraftfahrzeuginnenwandverkleidung bildenden Grundkörpers von der Kraftfahrzeuginnenwand bestimmt sich dabei über das erste und zweite Distanzelement des Kopplungskörpers. Dazu sind das erste und das zweite Distanzelement zum einen mit dem Grundkörper und zum anderen mit dem Verbindungselement verbunden. Sie weisen jeweils eine von der Rückseite des Grundkörpers ausgehende Höhe auf, die den Abstand zwischen dem Grundkörper und dem Verbindungselement definiert. Folglich bestimmen die Distanzelemente für ein an einer Kraftfahrzeuginnenwand angebrachtes Seitenwandverkleidungselement den Abstand zwischen Grundkörper und Kraftfahrzeuginnenwand. Das erste und zweite Distanzelement können dabei sowohl zueinander geneigt oder parallel verlaufend an dem Grundkörper angeordnet sein, wobei diese dann bevorzugt eine gleiche Höhe aufweisen, um das Verbindungselement parallel zu dem Grundkörper auszurichten. Über eine unterschiedliche Höhe der Distanzelemente kann jedoch im Bedarfsfall auch eine geneigte Ausrichtung des Verbindungselements gegenüber dem Grundkörper erreicht werden.

Wird ein Seitenwandverkleidungselement mittels des Kopplungskörpers stoffschlüssig an der Kraftfahrzeuginnenwand befestigt, so entfällt für die Befestigung die Notwendigkeit von Löchern in der Fahrzeugkarosserie. Durch die stoffschlüssige, bevorzugt über Klebemittel hergestellte Verbindung kann eine Kraftfahrzeuginnenwandverkleidung bestehend aus erfindungsgemäßen Seitenwandverkleidungselementen somit montiert werden, ohne das Kraftfahrzeug zu beschädigen, wobei im Bedarfsfall auch ein Rückbau des Fahrzeuginnenraums auf den Ursprungszustand in einfacher Weise durchgeführt werden kann.

Das erfindungsgemäße Seitenwandverkleidungselement bietet für viele verschiedene Kraftfahrzeuge die Möglichkeit, den Innenraum des Kraftfahrzeugs auf unkomplizierte Weise zu verkleiden. Über die Distanzelemente des Kopplungskörpers wird eine stabile Abstützung des Grundkörpers gegenüber der Kraftfahrzeuginnenwand gewährleistet. Über die Ausgestaltung des Kopplungskörpers kann daher grundsätzlich der Grundkörper in einem frei wählbaren Abstand gegenüber der Kraftfahrzeuginnenwand positioniert werden, wobei die auf den Grundkörper einwirkenden Kräfte zuverlässig auf die Rohbaustruktur der Fahrzeugkarosserie übertragen werden. Das erfindungsgemäße Seitenwandverkleidungselement kann weiterhin aufgrund seiner stoffschlüssigen Verbindung auf verschiedenen Materialien angebracht werden. Für eine spezielle Kraftfahrzeuginnwandform muss lediglich der Grundkörper entsprechend geformt sein.

Über die frei wählbare Form des Grundkörpers sowie der Ausgestaltung eines oder mehrerer, bevorzugt im Abstand voneinander über den Umfang des Grundkörpers verteilt angeordneter Kopplungskörper lässt sich das Seitenwandverkleidungselement fahrzeugspezifisch herstellen, beispielsweise derart, dass dieses sich in durch die Stützstreben abgegrenzte Aussparungen an der Kraftfahrzeuginnenwand einpassen lässt, so dass durch mehrere Seitenwandverkleidungselemente eine ebene Kraftfahrzeuginnenwand gebildet wird. Die Seitenwandverkleidungselemente können dabei derart ausgebildet sein, dass die Vorderseite des Grundkörpers bündig zu einer dem Innenraum zugewandten Oberseite der Stützstreben verläuft, um eine flächige Innenwand zu bilden. Alternativ können die Seitenwandverkleidungselemente auch so ausgebildet sein, dass die Grundkörper in der montierten Lage abschnittsweise auf den Oberseiten der Stützstreben aufliegen, wobei die Oberseiten benachbarter, aneinandergrenzender Seitenwandverkleidungselemente dann eine durchgehende Innenwand bilden.

Der erste, zweite, dritte und vierte Anschlussabschnitt sind dazu ausgelegt, das erste und zweite Distanzelement zum einen an den Grundkörper und zum anderen an das Verbindungselement anzuschließen, wobei die Verbindung grundsätzlich in beliebiger Weise ausgebildet sein kann, beispielsweise unter Verwendung geeigneter Hilfsmittel, wie Klebestreifen, Winkelverbindungen oder dergleichen. Auch besteht die Möglichkeit, Nutverbindungen vorzusehen, um eine formschlüssige Verbindung im Bereich des Anschlussabschnitts herzustellen.

Erfindungsgemäß ist zudem vorgesehen, dass im Bereich des vierten Anschlussabschnitts ein Anschlusselement zur flächigen Anlage an dem Grundkörper mit dem zweiten Distanzelement verbunden ist. Das zusätzliche Anschlusselement bietet die Möglichkeit, den Kopplungskörper im Bereich des vierten Anschlusselements über eine entsprechend der Ausprägung des Anschlusselements großen Fläche mit dem Grundkörper zu verbinden, wodurch eine besonders gute Abstützung des zweiten Distanzelements an dem Grundkörper erreicht wird. Hierdurch wird die Stabilität des Kopplungskörpers in ergänzender Weise gesteigert. Das Anschlusselement kann dabei beispielsweise aus einem flächigen Material, besonders bevorzugt aus dem gleichen Material wie das Distanzelement und/oder der Grundkörper gebildet sein. Ein flächiges Anschlusselement lässt sich besonders einfach und sicher mit einem flächigen Grundkörper verbinden. Durch eine übereinstimmende Materialwahl kann die ergänzende, durch das Anschlusselement bereitgestellte Stabilität in einfacher Weise gesteigert werden, da keine zusätzlichen Materialien gefordert werden und besonders bevorzugt das Anschlusselement im gleichen Produktionsschritt wie das Distanzelement und/oder der Grundkörper gefertigt wird.

Weiter erfindungsgemäß sind der Grundkörper, das erste Distanzelement, das Verbindungselement, das zweite Distanzelement und/oder das Anschlusselement einstückig ausgebildet und über Knickfalze miteinander verbunden. Eine einstückige Ausgestaltung bietet die Möglichkeit einer besonders einfachen und materialsparenden Herstellung des Seitenwandverkleidungselements. Gegenüber mehrteiligen Seitenwandverkleidungselementen können die Produktionsschritte zu deren Herstellung deutlich reduziert werden, nachdem die Notwendigkeit eines Zusammenbaus entfällt. Die einstückige Ausgestaltung bietet einerseits besonders haltbare Verbindungen zwischen den einzelnen Elementen und andererseits können die Verbindungen zwischen einzelnen Elementen mit gesteigerter Passgenauigkeit und Präzision geschaffen werden. Bei einer einstückigen Ausgestaltung bietet die Möglichkeit der Verbindung der einzelnen Elemente über Knickfalze eine besonders einfache Herstellung einer gelenkigen Verbindung zur Ausbildung des Kopplungskörpers. Das Seitenwandverkleidungselement kann als flacher Körper mit angesetzten Distanzelementen und Verbindungselement gefertigt werden, die für die Bildung des Kopplungskörpers um die Knickfalze verschwenkt werden.

Die Verbindung des Anschlusselements mit dem Grundkörper kann ebenfalls beliebig ausgebildet sein. Nach einer vorteilhaften Weiterbildung ist jedoch der vierte Anschlussabschnitt und/oder das Anschlusselement form- und/oder stoffschlüssig mit dem Grundkörper verbunden. Eine stoffschlüssige Verbindung kann zum Beispiel mittels eines Haftmittels geschaffen werden, welches zwischen dem Anschlussabschnitt und/oder dem Anschlusselement und dem Grundkörper angebracht ist. Alternativ können der Anschlussabschnitt und/oder das Anschlusselement in eine Materialaussparung im Grundkörper, beispielsweise in eine Nut, so eingefügt werden, dass sich eine formschlüssige Verbindung ergibt. Die form- und/oder stoffschlüssige Verbindung sorgt für eine sichere und dauerhafte Verbindung zwischen dem Anschlussabschnitt und/oder dem Anschlusselement und dem Grundkörper. Zudem ist eine form- und/oder stoffschlüssige Verbindung in vielen verschiedenen Weisen einfach realisierbar, so dass für verschiedene Ausgestaltungen des Anschlussabschnitts und/oder des Anschlusselements und des Grundkörpers eine individuelle, sichere und stabile form- und/oder stoffschlüssige Verbindung hergestellt werden kann. Zugleich ist der produktionstechnische und materielle Aufwand besonders gering.

Besonders bevorzugt ist gemäß einer vorteilhaften Ausbildung der Erfindung vorgesehen, dass das Anschlusselement mittels eines sich durch den Grundkörper und das Anschlusselement erstreckendes Befestigungselement, insbesondere eines Befestigungsclips ortsfest an dem Grundkörper festgelegt ist. Befestigungsclips gewährleisten eine sichere Verbindung, sind günstig herzustellen sowie einfach und schnell anzuwenden. Besonders eignen sich Befestigungsclips, da sie bezüglich der Dicke der aneinander zu befestigenden Materialien einen großen Bereich abdecken. Auch sind sie universell für viele verschiedene Materialien einsetzbar, da sie lediglich eine durch die aneinander zu befestigenden Materialien durchgehende Öffnung voraussetzten. So kann je nach Anforderungen an den Grundkörper und das Anschlusselement aus jeweils einer großen Bandbreite von Materialien und Materialstärken gewählt werden, welche durch die Befestigungsclips zuverlässig verbunden werden können. Das sich durch den Grundkörper und das Anschlusselement hindurch erstreckende Befestigungselement ermöglicht eine besonders zuverlässige Verbindung von Grundkörper und Anschlusselement, wobei auch mögliche herstellungsbedingte Abweichungen in der Form von Grundkörper und/oder Anschlusselement ausgeglichen werden können. Gleichzeitig unterbindet das sich durch Grundkörper und Anschlusselement hindurch erstreckende Befestigungselement in besonderem Maße Relativbewegungen beider Komponenten zueinander und bietet somit eine besonders sichere Verbindung und Abstützung auch bei hohen Kräften.

Die Ausgestaltung der stoffschlüssigen Verbindung zwischen Verbindungselement und Fahrzeuginnenwand ist grundsätzlich frei wählbar, so dass diese auf die zu verbindenden Materialien abgestimmt werden kann. Dabei kann das Klebemittel erst unmittelbar vor der Montage auf das Verbindungselement aufgetragen werden. Bei einer bevorzugten Ausgestaltung der Erfindung ist auf der Oberseite des Verbindungselements jedoch ein Klebemittel angeordnet. Das Klebemittel ermöglich es einfach und schnell eine stoffschlüssige Verbindung zwischen dem Verbindungselement, auf dem es vorangeordnet ist, und der Fahrzeuginnenwand herzustellen. Durch das vorangeordnete Klebemittel auf dem Verbindungselement kann bei der Montage auf einen zusätzlichen Montageschritt, dem Anbringen des Klebemittels auf der Kraftfahrzeuginnenwand und/oder dem Verbindungselement verzichtet werden. Das Klebemittel ist in einer montagefernen Fertigung bereits in besonders gleichmäßiger Weise auf dem Verbindungselement angeordnet, so dass bei der Montage eine besonders zuverlässige und gleichmäßige Verbindung mit der Kraftfahrzeuginnenwand erzielt werden kann. Das Klebemittel lässt sich in frei wählbarer Form auf dem Verbindungselement anordnen. Beispielsweise kann das Klebemittel durch einen Klebestreifen gebildet sein, welcher mit einem Schutzstreifen abgedeckt ist, bevor die Montage erfolgt.

Gemäß einer weiteren vorteilhaften Ausführungsform der Erfindung weist die Oberseite des Verbindungselements im Bereich des Klebemittels eine Koronabehandlung auf. Die Koronabehandlung gewährleistet in besonderer Weise die zuverlässige Anbindung des Klebemittels an der Oberseite des Verbindungselements. So kann die Oberseite des Verbindungselements durch die Koronabehandlung beispielsweise von flüssigen und/oder zähflüssigen Medien, wie pastösen Klebemitteln, besser benetzt werden. Das Klebemittel kann auf diese Weise eine stärkere Verbindung zu der koronabehandelten Oberfläche aufweisen. So verbessert die Koronabehandlung auf der Oberseite des Verbindungselements die stoffschlüssige Verbindung zwischen Verbindungselement und Fahrzeuginnenwand in ergänzender Weise.

Zur Bildung einer hängenden Seitenwandverkleidung ist eine genaue Ausrichtung der Seitenwandverkleidungselemente erforderlich. Üblicherweise werden hierzu separate Montagehilfsmittel benötigt. Nachdem das Seitenwandverkleidungselement gegenüber der Kraftfahrzeuginnenwand in der gewünschten Position ausgerichtet ist, ohne dabei fest verbunden zu sein, kann das Seitenwandverkleidungselement befestigt werden. Ist ein Klebemittel auf dem Verbindungselement angebracht, so muss bei der Ausrichtung darauf geachtet werden, dass während der Ausrichtung das Klebemittel nicht mit der Kraftfahrzeuginnenwand in Kontakt gebracht wird, da sonst sofort eine stoffschlüssige Verbindung entstünde. Folglich muss während der Ausrichtung, beispielsweise über die geeigneten Hilfsmittel, ein Abstand zwischen der Kraftfahrzeuginnenwand und dem Seitenwandverkleidungselement eingehalten werden, wodurch das Ausrichten erschwert und die Präzision vermindert wird.

Nach einer bevorzugten Ausführungsform der Erfindung ist an dem Verbindungselement ein Ausrichtelement angeordnet, welches von einer Oberseite des Verbindungselements vorsteht und in Richtung auf die Oberseite verlagerbar ist. Vorzugsweise sind zwei Ausrichtelemente im Abstand voneinander an dem Verbindungselement angeordnet. Die Verlagerbarkeit des Ausrichtelements schafft zwischen dem Verbindungselement und der zu verkleidenden Kraftfahrzeuginnenwand eine Beabstandung, so dass zuerst das Ausrichtelement mit der Kraftfahrzeuginnenwand in Kontakt tritt, wenn der Kopplungskörpers an diese angelegt wird. Das Ausrichtelement ist dazu ausgelegt, in Richtung auf die Oberseite des Verbindungselements verlagerbar zu sein, wodurch nach dieser Verlagerung ein Aufliegen des Verbindungselements an der Kraftfahrzeuginnenwand erreicht wird. Dazu kann das Ausrichtelement so ausgebildet sein, dass es bei einwirkendem Druck nachgibt, zum Beispiel durch ein ein- oder umklappendes Verhalten.

Es kann auch aus einem Material bestehen, welches sein Volumen durch Druckeinwirkung stark verringert, beispielsweise einem Schaumstoff. Das Ausrichtelement kann auch zum Beispiel in das Innere des Kopplungskörpers eingedrückt werden, so wie ein stiftförmiges Element.

Das Ausrichtelement ist folglich dazu ausgelegt, zwei Zustände einzunehmen, wobei es in seinem ersten Zustand von der Oberseite des Verbindungselements vorsteht und in seinem zweiten Zustand in Richtung der Oberseite verlagert ist. Dadurch ermöglicht das Ausrichtelement zwei Kontaktzustände zwischen der Oberseite des Verbindungselements und der Fahrzeuginnenwand. Dabei sind die Oberseite des Verbindungselements und die Fahrzeuginnenwand in dem ersten Zustand durch das vorstehende Ausrichtelement voneinander beabstandet und im zweiten Zustand bei in Richtung der Oberseite verlagertem Ausrichtelement aneinander anliegend angeordnet. Der erste Zustand ermöglicht es in vorteilhafter Weise, das Seitenwandverkleidungselement an der Kraftfahrzeuginnenwand anliegend auszurichten, ohne eine stoffschlüssige Verbindung zwischen der Oberseite des Verbindungselements und der Kraftfahrzeuginnenwand herzustellen. Mit einem an der Oberseite des Verbindungselements angeordneten Klebemittel kann so eine optimale Position für die Montage des Seitenwandverkleidungselements getestet oder nachjustiert werden, da das Seitenwandverkleidungselement entlang der Kraftfahrzeuginnenwand bewegt werden kann.

Zum formschlüssigen Verbinden des Seitenwandverkleidungselements mit der Kraftfahrzeuginnenwand kann dann das Ausrichtelement in Richtung der Oberfläche des Verbindungselements verlagert werden, beispielsweise durch Ausüben einer Kraft auf das Seitenwandverkleidungselement in Richtung der Kraftfahrzeuginnenwand. In diesem zweiten Zustand sind somit die Oberseite des Verbindungselements und die Kraftfahrzeuginnenwand formschlüssig miteinander verbunden. Besonders bevorzugt sind zwei Ausrichtelemente an der Oberfläche des Verbindungselements angebracht, um die Beabstandung zu der Kraftfahrzeuginnenwand in besonders gutem und gleichmäßigem Maße zu gewährleisten. Alternativ können mehr als zwei Ausrichtelemente an der Oberfläche des Verbindungselements angebracht sein.

Das Ausrichtelement kann an beliebiger Stelle auf oder an dem Verbindungselement befestigt sein, so dass es von dem Verbindungselement ausgehend vorsteht und sich zwischen diesem und der Kraftfahrzeuginnenwand befinden kann. Beispielsweise kann es als separates Bauteil mittig angeordnet sein. Besonders bevorzugt ist aber nach einer vorteilhaften Weiterbildung der Erfindung das Ausrichtelement durch einen Endbereich des Verbindungselements gebildet. Es kann am Endbereich des Verbindungselements fortsetzend angefügt oder bevorzugt aus dem Endbereich des Verbindungselements selbst gebildet sein. Das Verbindungselement kann hierzu beispielsweise in seinem Endbereich so eingeschnitten sein, dass der eingeschnittene Endbereich beispielsweise um eine Knickfalz von der Oberfläche des Verbindungselements abgewinkelt vorsteht und das Ausrichtelement bildet.

Das aus dem Endbereich gebildete Ausrichtelement lässt sich in einfacher Weise von der Oberseite des Verbindungselements vorstehend ausbilden, um eine Distanz zwischen der Oberseite des Verbindungselements und der Kraftfahrzeuginnenwand zu schaffen. Ferner ist besonders zuverlässig gewährleistet, dass es bei Druckeinwirkung in Richtung der Oberseite des Verbindungselements verlagert wird. Die Bildung des Ausrichtelements aus dem Endbereich gewährleistet insbesondere, dass nach der Verlagerung in Richtung auf die Oberfläche die formschlüssige Verbindung zwischen der Oberseite des Verbindungselements und der Kraftfahrzeuginnenwand nicht beeinträchtigt wird, da sich das Ausrichtelement in dieser Position neben der Oberseite des Verbindungselements und nicht zwischen dieser und der Kraftfahrzeuginnenwand befindet. Ferner lässt sich gemäß dieser Weiterbildung der Erfindung das Ausrichtelement besonders einfach und kostengünstig aus dem Verbindungselement bilden, wobei das Verbindungselement und das Ausrichtelement einstückig gefertigt sind. Die einstückige Fertigung bietet neben der einfachen und kostengünstigen Konstruktion den Vorteil einer besonders sicheren Verbindungsstelle zwischen beiden Elementen.

Die Herstellung des Seitenwandverkleidungselements in der Form, in der es auch montiert wird ist grundsätzlich frei wählbar. So besteht beispielsweise die Möglichkeit, einen oder mehrere Kopplungskörper an der Rückseite eines fahrzeugspezifisch ausgebildeten Grundkörpers zu montieren, so dass das Seitenwandverkleidungselement als mehrteiliger, vollständig starrer Körper ausgebildet ist.

Nach einer bevorzugten Ausgestaltung der Erfindung ist jedoch vorgesehen, dass das erste Distanzelement mit dem Grundkörper und/oder das erste Distanzelement mit dem Verbindungselement gelenkig und/oder das Verbindungselement mit dem zweiten Distanzelement und/oder das zweite Distanzelement ist mit dem Anschlusselement gelenkig verbunden ist. So können das erste und/oder das zweite Distanzelement, der Grundkörper und/oder das Verbindungselement selbst starr ausgebildet sein und sind in den Anschlussabschnitten durch ihre gelenkige Verbindung zueinander verschwenkbar. Die gelenkige Verbindung ermöglicht es, den Kopplungskörper als ebenen Formkörper mit dem Grundkörper auszubilden, wobei durch die Verschwenkbarkeit der Kopplungskörper an der Rückseite des Grundkörpers ausgebildet wird. Die gelenkige Verbindung ermöglicht es, das Seitenwandverkleidungselement aus einer ebenen Platte zu fertigen, bei der die Distanzelemente und das Verbindungselement zur Bildung des Kopplungskörpers aus der Ebene der Platte herausgefaltet werden. Dies bietet bei der Produktion, Lagerung und/oder dem Transport den Vorteil, dass das Seitenwandverkleidungselement besonders flach ausgebildet und die Bildung des Kopplungskörpers in einfacher Weise vor Ort vor der Montage erfolgen kann. Die gelenkige Verbindung ermöglicht es, in einer Ebene über einen Rand des Grundkörpers vorstehende Distanzelemente und Verbindungselemente in unkomplizierter Weise zum Kopplungskörper umzugestalten, wobei dies auch ohne den Einsatz weiterer Hilfsmittel erfolgen kann.

Das Seitenwandverkleidungselement kann grundsätzlich aus beliebigen, für den Einsatzzweck geeigneten Materialien hergestellt werden, wobei aufgrund der erwartenden, im Betrieb auf das Seitenwandverkleidungselement wirkenden Kräfte ausreichend stabile und gegebenenfalls dicke Materialien verwendet werden. Das Gewicht der Seitenwandverkleidungselemente kann dabei einen negativen Einfluss auf eine zulässige Zuladung haben, insbesondere dann, wenn beispielsweise massive Kunststoffplatten oder Holzplatten verwendet werden. Nach einer vorteilhaften Weiterbildung der Erfindung ist vorgesehen, dass der Grundkörper, das erste Distanzelement, das Verbindungselement, das zweite Distanzelement und/oder das Anschlusselement aus einem Kammerwerkstoff gebildet sind. Kammerwerkstoffe bestehen bevorzugt aus zwei oder mehreren, über hohlraumbildende Zwischenelemente voneinander beabstandete Plattenkörper. Die an den einander zugewandten Flächen angeordneten Zwischenelemente weisen beispielsweise eine gewellte, geriffelte, gezackte, genoppte oder ähnliche Form auf, um Hohlräume zu schaffen und gleichzeitig eine stabile Abstützung der Plattenkörper zu bilden. Durch den Einsatz des Kammerwerkstoffs kann ein besonders leichtes Seitenwandverkleidungselement mit hoher Stabilität bereitgestellt werden. Der Kammerwerkstoff kann dabei beispielsweise aus Kunststoff, Holz, leichtem Metall, und insbesondere aus einem Faserverbundwerkstoff bestehen.

Der Kopplungskörper kann grundsätzlich an beliebiger Position an der Rückseite des Grundkörpers angebracht sein, so dass sich das Seitenwandverkleidungselement fahrzeugspezifisch ausgestalten lässt. Nach einer bevorzugten Ausführungsform der Erfindung sind zwei Kopplungskörper im Abstand voneinander am Grundkörper, bevorzugt an einem Rand des Grundkörpers, angeordnet. Besonders bevorzugt sind die Kopplungskörper an sich gegenüberliegenden Rändern des Grundkörpers angeordnet. Die Verwendung von zwei oder mehr Kopplungskörpern an dem Grundkörper ermöglicht es zwei oder mehrere stoffschlüssige Verbindungen zwischen dem Seitenwandverkleidungselement und der Kraftfahrzeuginnenwand zu schaffen, wodurch eine besonders stabile stoffschlüssige Verbindung hergestellt werden kann. Die Beabstandung des Kopplungskörpers bewirkt dabei eine gleichmäßige Abstützung.

Die Erfindung löst die Aufgabe ferner durch ein Kraftfahrzeug mit einer an einer Kraftfahrzeuginnenwand angeordneten Kraftfahrzeuginnenwandverkleidung, wobei die Kraftfahrzeuginnenwandverkleidung mindestens ein stoffschlüssig verbundenes Seitenwandverkleidungselement aufweist.

Zur Bildung einer flächenbündigen Kraftfahrzeuginnenwandverkleidung können mehrere erfindungsgemäße oder gemäß einer oder mehrerer bevorzugter Ausführungsformen weitergebildete Seitenwandverkleidungselemente der vorstehend beschriebenen Art nebeneinander an der Kraftfahrzeuginnenwand angeordnet werden, so dass eine durchgehende Abdeckung der Kraftfahrzeuginnenwand entsteht. Die Seitenwandverkleidungselemente können dabei bevorzugt fahrzeugspezifisch dimensioniert sein, so dass Anpassungen einzelner Seitenwandverkleidungselemente zur Vermeidung von unverkleideten Bereichen an einer Kraftfahrzeuginnenwand vermieden werden.

Nach einer vorteilhaften Weiterbildung der Erfindung sind an der Kraftfahrzeuginnenwand von dieser vorstehende Stützstreben angeordnet und das Seitenwandverkleidungselement weist zur Bildung einer im wesentlichen flächenbündigen Kraftfahrzeuginnenwandverkleidung einen an den Abstand benachbarter Stützstreben angepassten Grundkörper und einen an die Höhe der Stützstreben angepassten Kopplungskörper auf.

Der Abstand zwischen zwei Stützstreben entspricht dabei der Distanz zwischen diesen entlang der Oberfläche der Kraftfahrzeuginnenwand. Der Grundkörper ist fahrzeugspezifisch so ausgestaltet, dass er mindestens dem Abstand der benachbarten Stützstreben entspricht, um den Bereich zwischen diesen flächenbündig zu verkleiden. Auf diese Weise bestehen zwischen den benachbarten Stützstreben keine unverkleideten Bereiche. Der erfindungsgemäße Grundkörper bietet den Vorteil, dass seine Formgebung in der Produktion unkompliziert an die zu verkleidende Seitenwand angepasst werden kann, indem er eine fahrzeugspezifische Form zur flächenbündigen Verkleidung einnimmt.

Der Grundkörper kann hierzu so bemessen sein, dass er einen und/oder mehrere Stützstreben teilweise oder vollständig überdeckt. Die Höhe des Kopplungskörpers entspricht dabei der Höhe der Stützstreben, d.h. dem Abstand zwischen der Kraftfahrzeuginnenwand und der dem Fahrzeuginnenraum zugewandten Oberseite der Stützstreben. Der Kopplungskörper bietet dabei den Vorteil, dass seine Formgebung in der Produktion unkompliziert an die zu verkleidende Fahrzeuginnenwand angepasst werden kann. So wird der Kopplungskörper demnach derart an die Höhe der Stützstreben angepasst, dass der Grundkörper mit seiner Rückseite an der Oberseite der Stützstrebe anliegt und die Stützstreben teilweise oder vollständig überdeckt. Diese Anpassung von Grundkörper und Kopplungskörper an die Stützstreben ermöglicht es in besonders zuverlässiger Weise, die Seitenwandverkleidungselemente flächenbündig anzuordnen. Eine Anlage des Grundkörpers an der Oberseite der Stützstrebe verbessert dabei die Abstützung des Seitenwandverkleidungselements in ergänzender Weise.

Nach einer bevorzugten Weiterbildung der Erfindung ist der Kopplungskörper derart ausgebildet, dass der Grundkörper mit seiner dem Fahrzeuginnenraum zugewandten Oberseite im Wesentlichen flächenbündig zu einer Oberseite der Stützstreben angeordnet ist. Die Maße des Grundkörpers entlang der Oberfläche der Kraftfahrzeuginnenwand entsprechen dem Bereich, der von zwei oder mehr benachbart zueinander verlaufenden Stützstreben begrenzt ist. So kann der Grundkörper zwischen diesen beispielsweise umlaufenden, eine Ausnehmung bildenden Stützstreben angebracht sein und mit jeweils einem Rand formschlüssig an einer der Stützstreben anliegen. Dabei kann die Höhe des Kopplungskörpers der Höhe der Stützstreben entsprechen, so dass die Oberseiten der Stützstreben und die des Grundkörpers in einer Ebene liegen. Auf diese Weise füllt das Seitenwandverkleidungselement den Bereich benachbarter Stützstreben formschlüssig aus. Die Kraftfahrzeuginnenwandverkleidung kann so entlang einer Kraftfahrzeuginnenwand als eine einheitliche Ebene ausgestaltet sein, ohne Bereiche der Kraftfahrzeuginnenwand unverkleidet zu lassen. Zugleich stabilisieren die Stützstreben die Kraftfahrzeuginnenwandverkleidung, da sie Bewegungen des Seitenwandverkleidungselements entlang der Kraftfahrzeuginnenwand abdämpfen und einen zusätzlichen Halt für das Seitenwandverkleidungselement bieten.

Ein Ausführungsbeispiel der Erfindung wird nachstehend anhand von Zeichnungen erläutert. In den Zeichnungen zeigen:
- Fig. 1: eine erste schematische Darstellung eines Seitenwandverkleidungselements,
- Fig. 2: eine zweite schematische Darstellung des Seitenwandverkleidungselements von Fig. 1,
- Fig. 3: eine dritte schematische Darstellung eines Seitenwandverkleidungselements von Fig. 1 und
- Fig. 4: ein Ausschnitt einer Kraftfahrzeuginnenwand mit einem Seitenwandverkleidungselement nach Fig. 2.

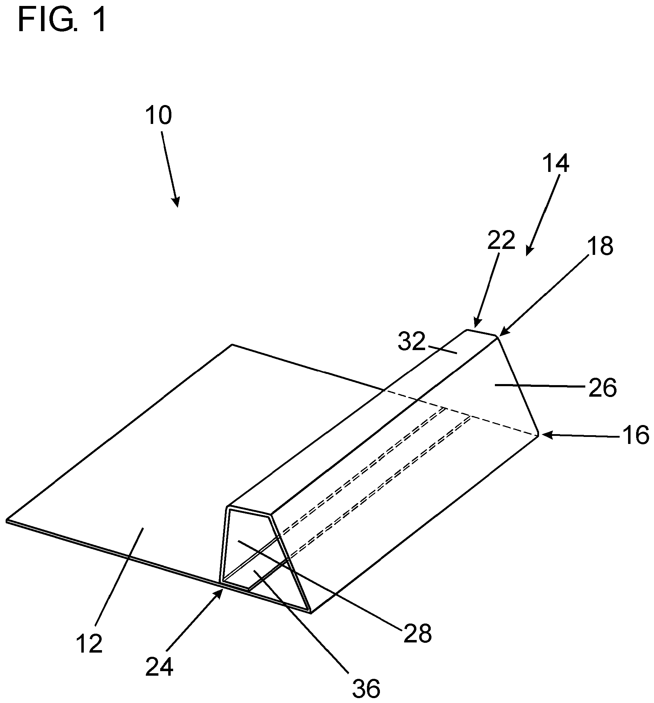

Fig. 1 zeigt ein erstes Ausführungsbeispiel eines Seitenwandverkleidungselements 10 zur Verkleidung einer Kraftfahrzeuginnenwand 58 eines Kraftfahrzeugs. Das Seitenwandverkleidungselement 10 weist einen ebenen, rechteckigen Grundkörper 12 und einen Kopplungskörper 14 auf. Der Kopplungskörper 14 umfasst einen ersten Anschlussabschnitt 16, einen zweiten Anschlussabschnitt 18, einen dritten Anschlussabschnitt 22 und einen vierten Anschlussabschnitt 24, ein erstes Distanzelement 26 und ein zweites Distanzelement 28, ein Verbindungselement 32 und ein Anschlusselement 36. Die Distanzelemente 26, 28, das Verbindungselement 32 und das Anschlusselement 36 sind ebenfalls eben und flächig ausgestaltet.

Der Kopplungskörper 14 ist im Bereich eines Randes 38 des Grundkörpers 12 angeordnet. Das erste Distanzelement 26 ist von dem Grundkörper 12 im Bereich des ersten Anschlussabschnitts 16 abgewinkelt, wobei der erste Anschlussabschnitt 16 dabei durch den Rand 38 gebildet ist. Das erste Distanzelement 26 ist durch den zweiten Anschlussabschnitt 18 begrenzt, an den das Verbindungselement 32 an das erste Distanzelement 26 anschließt. Das Verbindungselement 32 verläuft dabei im Wesentlichen parallel zu dem Grundkörper 12 und ist seinerseits von dem dritten Anschlussabschnitt 22 begrenzt. In Bereich des dritten Anschlussabschnitts 22 ist das zweite Distanzelement 28 abgewinkelt mit dem Verbindungselement 32 verbunden. Im Bereich des vierten Anschlussabschnitts 24 ist das zweite Distanzelement 28 mit dem Anschlusselement 36 verbunden, welches flächig und mittels Befestigungsclips 62 fixiert auf dem Grundkörper 12 aufliegt. Der Kopplungskörper 14 ist somit als Hohlkörper ausgebildet, welcher durch die Flächen der Distanzelemente 26, 28, des Verbindungselements 32 und des Anschlusselements 36 und einem flächigen Bereich des Grundkörpers 12 begrenzt wird.

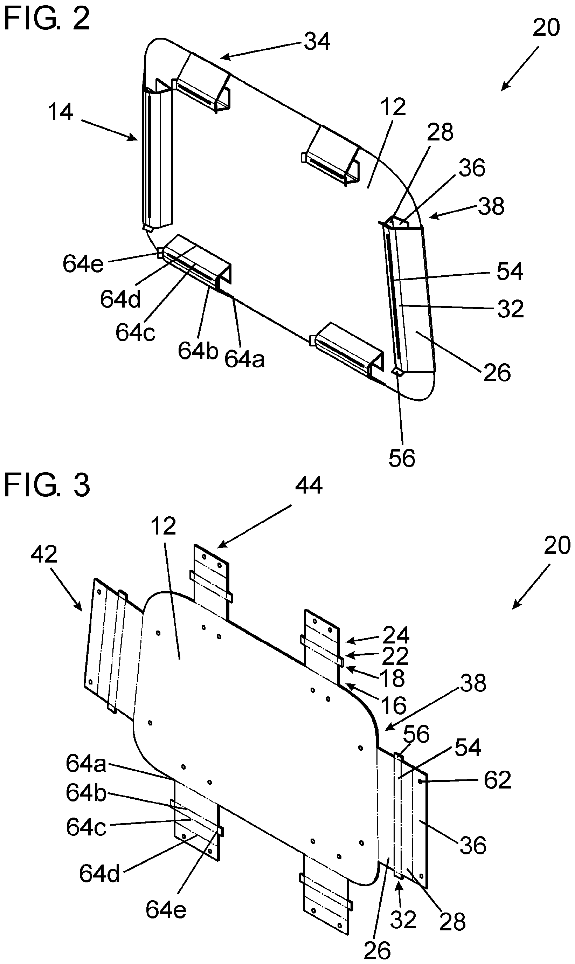

Ein zweites Ausführungsbeispiel des Seitenwandverkleidungselements 20 ist in Fig. 2 - -4 gezeigt. Das Seitenwandverkleidungselement 20 ist in Fig. 3 als Rohkörper in der Form gezeigt, in der es hergestellt wird. An den ebenen Grundkörper 12 schließen ebene Laschen 42, 44 an, aus denen die Kopplungskörper 14, 34 gebildet werden, um ein montagefertiges Seitenwandverkleidungselement 20 zu erhalten, wie es in Fig. 2 dargestellt ist.

An den Längsseiten des Grundkörpers 12 sind jeweils zwei schmale Laschen 44 für zwei schmale Kopplungskörper 34 angebracht und an den kurzen Seiten des Grundkörpers 12 ist jeweils eine breite Lasche 42 für einen breiten Kopplungskörper 14 angebracht. Zur Ausbildung der Kopplungskörper 14, 34 weisen die Laschen 42, 44 jeweils vier Knickfalze 64a, 64b, 64c, 64d auf, die alle parallel zu dem Rand des Grundkörpers 12 verlaufen, an den sie jeweils anschließen.

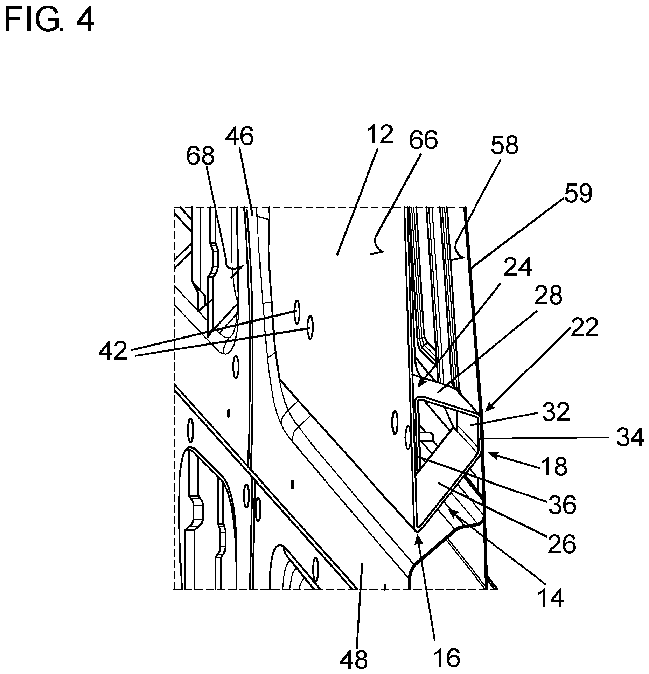

Durch Verschwenken der einzelnen Elemente 26, 28, 32, 36 zueinander entlang der Knickfalze 64a, 64b, 64c, 64d werden die Laschen 42, 44 in die Form der Kopplungskörper 14, 34 überführt und mit ihrem Anschlusselement 36 an dem Grundkörper 12 mittels Befestigungsclips 62 befestigt, wodurch der Rohkörper des Seitenwandverkleidungselements 20 insgesamt in das montagefertige Seitenwandverkleidungselement 20 überführt wird (vgl. Fig. 4).

Das Verbindungselement 32 weist einen Klebestreifen 54 auf, welcher mit einem Schutzstreifen abgedeckt ist, der vor Montage an der Kraftfahrzeuginnenwand 58 entfernt wird. Zudem sind an jedem Verbindungselement 32, diese verlängernde Ausrichtelemente 56 angeordnet, welche über jeweils einen Knickfalz 64e gelenkig mit dem Verbindungselement 32 verbunden sind. Im montagefertigen, aber nicht montierten Zustand des Seitenwandverkleidungselements 20 sind die Ausrichtelemente 56 durch Verschwenken um die Knickfalze 64e von dem Verbindungselement 32 abgewinkelt und von dem Grundkörper 12 wegweisend angeordnet. Wird das montagefertige Seitenwandverkleidungselement 20 vor der Montage an die Kraftfahrzeuginnenwand 58 angelegt, um eine gewünschte Position auszurichten, so beabstanden die von dem Verbindungselement 32 vorstehenden Ausrichtelemente 56 das Verbindungselement 32 mit dem Klebestreifen 54 von der Kraftfahrzeuginnenwand 58, wodurch eine stoffschlüssige Verbindung zwischen dem Klebestreifen 54 und der Kraftfahrzeuginnenwand 58 verhindert wird.

Wie in Fig. 4 dargestellt kann das montagefertige Seitenwandverkleidungselement 20, nachdem es in der gewünschten Position gegenüber der Kraftfahrzeuginnenwand 58 ausgerichtet ist, an dieser angebracht werden, indem das in Fig. 2 dargestellte Seitenwandverkleidungselement 20 mit auf den Verbindungselementen 32 angebrachten Klebestreifen 54, an die Kraftfahrzeuginnenwand 58 angedrückt wird, wobei die Ausrichtelemente 56 um die Knickfalze 64e geschwenkt werden, so dass sie wieder wie im Zustand des Rohkörpers zu dem jeweiligen Verbindungselement 32 fluchtend angeordnet sind. Die Verbindungselemente 32 der Kopplungskörper 14, 34 liegen benachbart zu einer Längs- bzw. Querstützstrebe 46, 48 an der Kraftfahrzeuginnenwand 58 an und verlaufen parallel zu diesen. Die Distanzelemente 26, 28 beabstanden den Grundkörper 12 so weit von dem Verbindungselement 32 und somit von der Kraftfahrzeuginnenwand 58, dass eine Oberseite 66 des Grundkörpers 12 mit den Oberseiten 68 der Längs- und Querstützstreben 46, 48 in einer Ebene liegt und eine Fläche bildet.

Mit mehreren Seitenwandverkleidungselementen 20 gemäß dem zweiten Ausführungsbeispiel können mehrere rechteckige Bereiche 52, begrenzt und gebildet durch je zwei Längs- und zwei Querstützstreben 46, 48, ausfüllend abgedeckt werden, so dass eine vollständige Kraftfahrzeuginnenwand 58 eben ausgekleidet ist. Auf diese Weise können außerdem eine oder mehrere Kraftfahrzeuginnenwände 58 eines Außenblechs 59 des Kraftfahrzeugs ausgekleidet werden.

### Bezugszeichenliste

- 10, 20: Seitenwandverkleidungselement
- 12: Grundkörper
- 14: 1 Kopplungskörper
- 16: 1. Anschlussabschnitt
- 18: 2. Anschlussabschnitt
- 22: 3. Anschlussabschnitt
- 24: 4. Anschlussabschnitt
- 26: 1. Distanzelement
- 28: 2. Distanzelement
- 32: Verbindungselement
- 34: 2. Kopplungskörper
- 36: Anschlusselement
- 38: Rand des Grundkörpers
- 42: 1. Lasche
- 44: 2. Lasche
- 46: Längsstützstreben
- 48: Querstützstreben
- 52: rechteckförmiger Bereich
- 54: Klebestreifen
- 56: Ausrichtelement
- 58: Kraftfahrzeuginnenwand
- 59: Außenblech
- 62: Befestigungsclips
- 64 a, b, c, d, e: Knickfalze
- 66: Oberseite des Grundkörpers
- 68: Oberseite der Längs- bzw. Querstützstreben

## Patentansprüche

1. Seitenwandverkleidungselement für Kraftfahrzeuginnenwände (58), mit
- einem Grundkörper (12) zur Bildung eines Abschnitts einer Kraftfahrzeuginnenwandverkleidung und
- einem von dem Grundkörper (12) vorstehenden Kopplungskörper (14) zur Beabstandung des Grundkörpers (12) von der Kraftfahrzeuginnenwand (58),
wobei der Kopplungskörper
- ein über einen ersten Anschlussabschnitt (16) mit dem Grundkörper (12) und über einen zweiten Anschlussabschnitt (18) mit einem Verbindungselement (32) verbundenes erstes Distanzelement (26),
- ein über einen dritten Anschlussabschnitt (22) mit dem Verbindungselement (32) und über einen vierten Anschlussabschnitt (24) mit dem Grundkörper (12) verbundenes zweites Distanzelement (28) und
- ein im Bereich des vierten Anschlussabschnitts (24) mit dem zweiten Distanzelement (28) verbundenes Anschlusselement (36) zur flächigen Anlage an dem Grundkörper (12)
aufweist,
**dadurch gekennzeichnet, dass**
das Verbindungselement (32) des Kopplungskörpers (14) zur stoffschlüssigen Befestigung an der Kraftfahrzeuginnenwand (58) ausgebildet ist, wobei der Grundkörper (12), das erste Distanzelement (26), das Verbindungselement (32), das zweite Distanzelement (28) und/oder das Anschlusselement (36) einstückig ausgebildet und über Knickfalze (16, 18, 22, 24) miteinander verbunden sind.

2. Seitenwandverkleidungselement nach Anspruch 1, **dadurch gekennzeichnet, dass** der vierte Anschlussabschnitt (24) und/oder das Anschlusselement (36) form- und/oder stoffschlüssig mit dem Grundkörper (12) verbunden sind.

3. Seitenwandverkleidungselement nach Anspruch 1 oder 2, **dadurch gekennzeichnet, dass** das Anschlusselement (36) mittels eines sich durch den Grundkörper (12) und das Anschlusselement (36) erstreckenden Befestigungselements, insbesondere Befestigungsclips (62), ortsfest an dem Grundkörper (12) festgelegt ist.

4. Seitenwandverkleidungselement nach einem oder mehreren der vorhergehenden Ansprüche, **dadurch gekennzeichnet, dass** an der Oberseite des Verbindungselements (32) ein Klebemittel (54) angeordnet ist.

5. Seitenwandverkleidungselement nach einem oder mehreren der vorhergehenden Ansprüche, **dadurch gekennzeichnet, dass** die Oberseite des Verbindungselements (32) im Bereich des Klebemittels (54) eine Koronabehandlung aufweist.

6. Seitenwandverkleidungselement nach einem oder mehreren der vorhergehenden Ansprüche, **gekennzeichnet durch** ein, vorzugsweise zwei im Abstand voneinander an dem Verbindungselement (32) angeordnete, von einer Oberseite des Verbindungselements (32) vorstehende und in Richtung auf die Oberseite verlagerbare Ausrichtelemente (56).

7. Seitenwandverkleidungselement nach einem oder mehreren der vorhergehenden Ansprüche, **dadurch gekennzeichnet, dass** das Ausrichtelement (56) durch einen Endbereich des Verbindungselements (32) gebildet ist.

8. Seitenwandverkleidungselement nach einem oder mehreren der vorhergehenden Ansprüche, **dadurch gekennzeichnet, dass**
- das erste Distanzelement (26) mit dem Grundkörper (12) und/oder
- das erste Distanzelement (26) mit dem Verbindungselement (32) und/oder
- das Verbindungselement (32) mit dem zweiten Distanzelement (28) und/oder
- das zweite Distanzelement (28) mit dem Anschlusselement (36) gelenkig verbunden ist.

9. Seitenwandverkleidungselement nach einem oder mehreren der vorhergehenden Ansprüche, **dadurch gekennzeichnet, dass** der Grundkörper (12), das erste Distanzelement (26), das Verbindungselement (32), das zweite Distanzelement (28) und/oder das Anschlusselement (36) aus einem Kammerwerkstoff gebildet sind.

10. Seitenwandverkleidungselement nach einem oder mehreren der vorhergehenden Ansprüche, **dadurch gekennzeichnet, dass** zwei Kopplungskörper (14) im Abstand voneinander an dem Grundkörper (12), bevorzugt an einem Rand (38) des Grundkörpers, angeordnet sind.

11. Kraftfahrzeug mit einer an einer Kraftfahrzeuginnenwand (58) angeordneten Kraftfahrzeuginnenwandverkleidung, **dadurch gekennzeichnet, dass** die Kraftfahrzeuginnenwandverkleidung mindestens ein stoffschlüssig verbundenes Seitenwandverkleidungselement (10) gemäß einem oder mehreren der Ansprüche 1 bis 11 aufweist.

12. Kraftfahrzeug nach Anspruch 11, **dadurch gekennzeichnet, dass** an der Kraftfahrzeuginnenwand (58) von dieser vorstehende Stützstreben (46, 48) angeordnet sind und das Seitenwandverkleidungselement (10) zur Bildung einer im wesentlichen flächenbündigen Kraftfahrzeuginnenwandverkleidung
- einen an den Abstand benachbarter Stützstreben (46, 48) angepassten Grundkörper (12) und
- einen an die Höhe der Stützstreben (46, 48) angepassten Kopplungskörper (14) aufweist.

13. Kraftfahrzeug (40) nach Anspruch 11 oder 12, **dadurch gekennzeichnet, dass** der Kopplungskörper (14) derart ausgebildet ist, dass der Grundkörper (12) im wesentlichen flächenbündig zu einer Oberseite einer der Stützstreben (46, 48) angeordnet ist.

## Claims

1. A side wall cladding element for motor vehicle interior walls (58), comprising
- a base body (12) for forming a portion of a motor vehicle interior wall cladding and
- a coupling body (14) protruding from the base body (12) for spacing the base body (12) apart from the motor vehicle interior wall (58),
wherein
the coupling body has
- a first spacer element (26) which is connected via a first attachment portion (16) to the base body (12) and via a second attachment portion (18) to the connecting element (32),
- a second spacer element (28) which is connected via a third attachment portion (22) to the connecting element (32) and via a fourth attachment portion (24) to the base body (12) and
- an attachment element (36) which is connected to the second spacer element (28) in the region of the fourth attachment portion (24) so as to bear flat against the base body (12),
**characterized in that** the coupling body of the connecting element (32) is configured so as to be fastened to the motor vehicle interior wall (58) by a material connection,
wherein the base body (12), the first spacer element (26), the connecting element (32), the second spacer element (28) and/or the attachment element (36) are configured integrally and are connected together via crease folds (16, 18, 22, 24).

2. The side wall cladding element according to claim 1, **characterized in that** the fourth attachment portion (24) and/or the attachment element (36) are connected by a positive and/or material connection to the base body (12).

3. The side wall cladding element according to claim 1 or 2, **characterized in that** the attachment element (36) is secured fixedly to the base body (12) by means of a fastening element, in particular a fastening clip (62), extending through the base body (12) and the attachment element (36).

4. The side wall cladding element according to one or more of the preceding claims, **characterized in that** an adhesive (54) is arranged on the upper face of the connecting element (32).

5. The side wall cladding element according to one or more of the preceding claims, **characterized in that** the upper face of the connecting element (32) has a corona treatment in the region of the adhesive (54).

6. The side wall cladding element according to one or more of the preceding claims, **characterized by** one, preferably two, alignment elements (56) which are arranged spaced apart from one another on the connecting element (32), which protrude from an upper face of the connecting element (32) and which are displaceable in the direction of the upper face.

7. The side wall cladding element according to one or more of the preceding claims, **characterized in that** the alignment element (56) is formed by an end portion of the connecting element (32).

8. The side wall cladding element according to one or more of the preceding claims, **characterized in that**
- the first spacer element (26) is connected in an articulated manner to the base body (12) and/or
- the first spacer element (26) is connected in an articulated manner to the connecting element (32) and/or
- the connecting element (32) is connected in an articulated manner to the second spacer element (28) and/or
- the second spacer element (28) is connected in an articulated manner to the attachment element (36).

9. The side wall cladding element according to one or more of the preceding claims, **characterized in that** the base body (12), the first spacer element (26), the connecting element (32), the second spacer element (28) and/or the attachment element (36) are formed from a cavity-containing material.

10. The side wall cladding element according to one or more of the preceding claims, **characterized in that** two coupling bodies (14) are arranged spaced apart from one another on the base body (12), preferably at an edge (38) of the base body.

11. A motor vehicle having a motor vehicle interior wall cladding arranged on a motor vehicle interior wall (58), **characterized in that** the motor vehicle interior wall cladding comprises at least one side wall cladding element (10) which is connected by a material connection according to one or more of claims 1 to 11.

12. The motor vehicle according to claim 11, **characterized in that** support struts (46, 48) are arranged on the motor vehicle interior wall (58), said support struts protruding therefrom and, for forming a substantially flush-mounted motor vehicle interior wall cladding, the side wall cladding element (10) comprises
- a base body (12) which is adapted to the spacing of adjacent support struts (46, 48) and
- a coupling body (14) which is adapted to the height of the support struts (46, 48).

13. The motor vehicle (40) according to claim 11 or 12, **characterized in that** the coupling body (14) is configured such that the base body (12) is arranged substantially flush-mounted with an upper face of one of the support struts (46, 48).

## Revendications

1. Élément de revêtement de paroi latérale pour parois intérieures de véhicule automobile (58), comprenant
- un corps de base (12) destiné à former une partie d'un revêtement de paroi intérieure de véhicule automobile et
- un corps d'accouplement (14) faisant saillie à partir du corps de base (12) pour espacer le corps de base (12) de la paroi intérieure de véhicule automobile (58),
dans lequel le corps d'accouplement présente
- un premier élément d'espacement (26) relié au corps de base (12) par le biais d'une première partie de raccordement (16) et à l'élément de liaison (32) par le biais d'une deuxième partie de raccordement (18),
- un deuxième élément d'espacement (28) relié à l'élément de liaison (32) par le biais d'une troisième partie de raccordement (22) et au corps de base (12) par le biais d'une quatrième partie de raccordement (24) et
- un élément de raccordement (36) relié au deuxième élément d'espacement (28) dans la région de la quatrième partie de raccordement (24), destiné pour un appui plan sur le corps de base (12),
**caractérisé en ce que** l'élément de liaison (32) du corps d'accouplement est conçu pour une liaison par la matière à la paroi intérieure de véhicule automobile (58),
dans lequel le corps de base (12), le premier élément d'espacement (26), l'élément de liaison (32), le deuxième élément d'espacement (28) et/ou l'élément de raccordement (36) sont conçus d'une seule pièce et reliés entre eux par des arêtes de plis (16, 18, 22, 24).

2. Élément de revêtement de paroi latérale selon la revendication 1, **caractérisé en ce que** la quatrième partie de raccordement (24) et/ou l'élément de raccordement (36) sont reliés par complémentarité de forme et/ou par une liaison par la matière au corps de base (12).

3. Élément de revêtement de paroi latérale selon la revendication 1 ou 2, **caractérisé en ce que** l'élément de raccordement (36) est immobilisé fixement sur le corps de base (12) au moyen d'un élément de fixation s'étendant à travers le corps de base (12) et l'élément de raccordement (36), en particulier d'un clip de fixation (62).

4. Élément de revêtement de paroi latérale selon l'une ou plusieurs des revendications précédentes, **caractérisé en ce qu'**un adhésif (54) est disposé sur le côté supérieur de l'élément de liaison (32).

5. Élément de revêtement de paroi latérale selon l'une ou plusieurs des revendications précédentes, **caractérisé en ce que** le côté supérieur de l'élément de liaison (32) présente un traitement corona dans la région de l'adhésif (54).

6. Élément de revêtement de paroi latérale selon l'une ou plusieurs des revendications précédentes, **caractérisé par** un, de préférence deux éléments d'alignement (56) disposés à distance l'un de l'autre sur l'élément de liaison (32), faisant saillie à partie d'un côté supérieur de l'élément de liaison (32) et déplaçables vers le côté supérieur.

7. Élément de revêtement de paroi latérale selon l'une ou plusieurs des revendications précédentes, **caractérisé en ce que** l'élément d'alignement (56) est formé par une région d'extrémité de l'élément de liaison (32).

8. Élément de revêtement de paroi latérale selon l'une ou plusieurs des revendications précédentes, **caractérisé en ce que**
- le premier élément d'espacement (26) est relié de façon articulée au corps de base (12) et/ou
- le premier élément d'espacement (26) est relié de façon articulée à l'élément de liaison (32) et/ou
- l'élément de liaison (32) est relié de façon articulée au deuxième élément d'espacement (28) et/ou
- le deuxième élément d'espacement (28) est relié de façon articulée à l'élément de raccordement (36).

9. Élément de revêtement de paroi latérale selon l'une ou plusieurs des revendications précédentes, **caractérisé en ce que** le corps de base (12), le premier élément d'espacement (26), l'élément de liaison (32), le deuxième élément d'espacement (28) et/ou l'élément de raccordement (36) sont constitués d'un matériau de chambre.

10. Élément de revêtement de paroi latérale selon l'une ou plusieurs des revendications précédentes, **caractérisé en ce que** deux corps d'accouplement (14) sont disposés à distance l'un de l'autre sur le corps de base (12), de préférence sur un bord (38) du corps de base.

11. Véhicule automobile avec un revêtement de paroi intérieure de véhicule automobile disposé sur une paroi intérieure de véhicule automobile (58), **caractérisé en ce que** le revêtement de paroi intérieure de véhicule automobile présente au moins un élément de revêtement de paroi latérale (10) relié par une liaison par la matière selon l'une ou plusieurs des revendications 1 à 11.

12. Véhicule automobile selon la revendication 11, **caractérisé en ce que** des entretoises de support (46, 48) sont disposées sur la paroi intérieure de véhicule automobile (58) en faisant saillie à partir de celle-ci et, pour la formation d'un revêtement de paroi intérieure de véhicule automobile essentiellement en affleurement, l'élément de revêtement de paroi latérale (10) présente :
- un corps de base (12) adapté à l'espacement entre des entretoises de support (46, 48) voisines et
- un corps d'accouplement (14) adapté à la hauteur des entretoises de support (46, 48).

13. Véhicule automobile (40) selon la revendication 11 ou 12, **caractérisé en ce que** le corps d'accouplement (14) est conçu de telle façon que le corps de base (12) est disposé essentiellement en affleurement par rapport à un côté supérieur de l'une des entretoises de support (46, 48).
